# EUROPEAN PATENT SPECIFICATION

(11) **EP 0 483 042 B1**
(45) Date of publication and mention of the grant of the patent: **25.01.1995**
(21) Application number: 91500065.7
(22) Date of filing: 14.06.1991
(51) Int. Cl.: B62B 7/10, B62B 7/08

(54) **Folding chassis for babies' pushchairs**
Faltbarer Rahmen von Kinderwagen
Châssis pliable pour poussettes d'enfant

(30) Priority: 22.10.1990 ES 9002663
(43) Date of publication of application: 29.04.1992
(73) Proprietor: Jané S.A., E-08184 Palau de Plegamans (Barcelona) (ES)
(72) Inventor: Jane Cabagnero, Ramón, E-08013 Barcelona (ES)
(74) Representative: Pastells Teixido, Manuel

(56) References cited:
- EP-A- 0 271 422
- FR-A- 2 566 357
- GB-A- 1 176 517
- GB-A- 2 162 801

## Description

There are different types of folding chassis for babies' pushchairs, among them some which have the inverted U-shaped handle mounted such that it slides down over the front wheel-bearing legs and which are folded by pushing the handle down, as is the case with the pushchair chassis referred to in Spanish utility model Nº 289.442 belonging to the same applicant firm.

The fact is also known that the top ends of the front legs are articulated by a clamp to the top ends of some link-rods which by their lower part are articulated to a middle part of the rear legs, as disclosed in the patent GB-A-2162801, which forms the basis for the 2-part form of claim 1.

More specifically, the chassis this invention relates to is an improvement on the one pertaining to Spanish Invention Patent Nº P8603325, the handle of which slides up and down the front legs via a guide clamp to which is jointed the top end of the corresponding rear leg, this improvement enabling the chassis to be fitted very simply with either a seat or carry-cot.

Thus, the link-rods froming part of a U-shaped crossmember and at the top part of said link-rods are rearwardly articulated respective long rods for the support of a seat and/or a carry-cot, which will be fitted to them via the appropriate means.

These long rods rest respectively, at their front ends, on struts which are jointed, above, to said ends and, below, to the top part of the rear legs.

This chassis may be fitted on each side with a hook-type retainer device at the top of the front legs, which retainers clip on to pivots fixed to the arms of the handle in order to lock the chassis in its unfolded position, and each having its respective knob for unlocking at the sides.

These and other characteristics will become clearer from the detailed description below, which is further facilitated by two sheets of drawings representing an embodiment given only as a non-limiting example of the scope of the invention.

In the drawings:

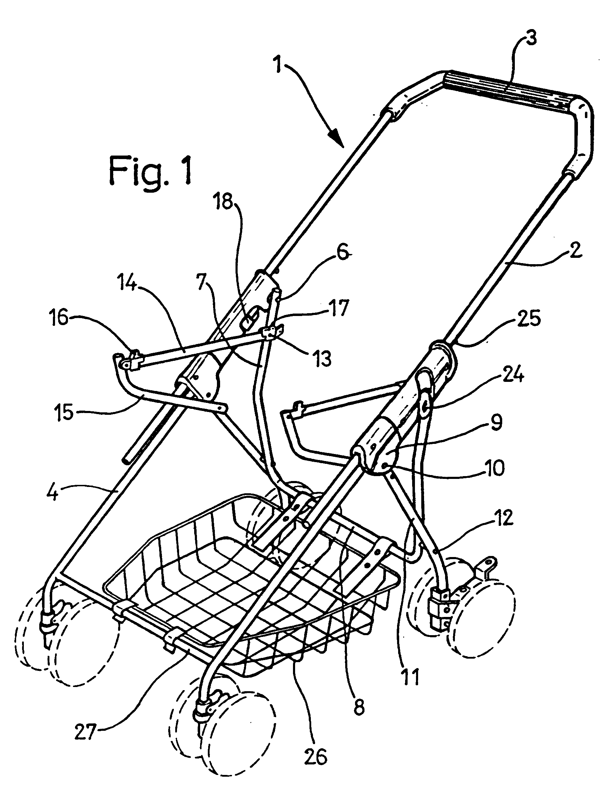

Figure 1 shows, in perspective, the pushchair chassis unfolded,
figure 2 shows an elevation of this same chassis folded,
figure 3 shows a cross-section of the retainer assembly on the front leg, and
figure 4 is an overhead view of said assembly.

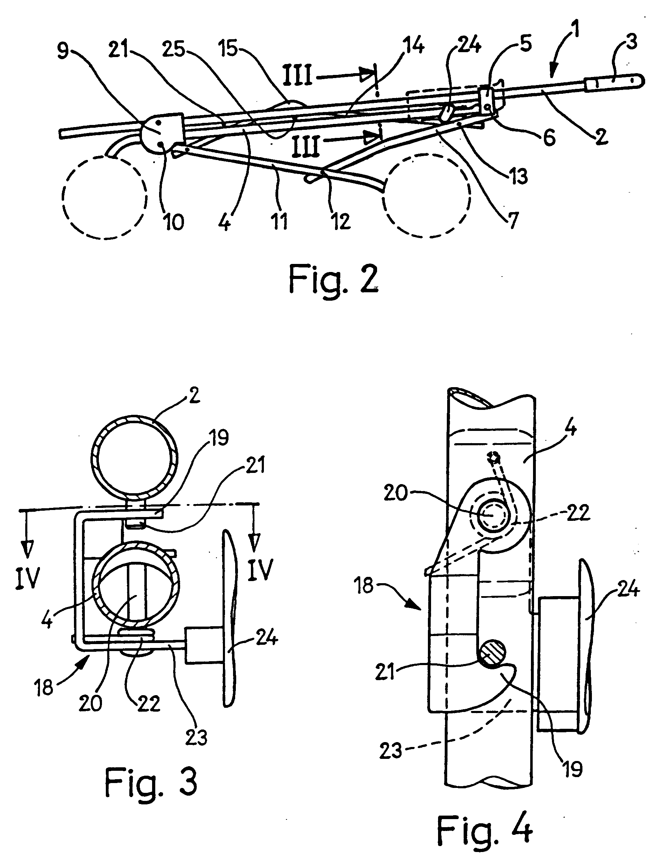

In accordance with the drawings, the chassis comprises a U-shaped handle 1 with parallel arms 2 and a grip 3 in the middle section, this handle structure being mounted such that it slides up and down the front legs 4, through guide clamps 5 fitted to said legs (figure 2) to which the top ends of some link-rods forming the arms 7 of a U-shaped crossmember 8 are jointed by means of a pin 6.

Just a bit further down from the clamps 5, the handle arms 2 are joined to other guide clamps 9 through which the front legs 4 slide and to which the top ends of the rear legs 11 are jointed by means of a pin 10, the lower part of the arms of the U-shaped member 8 being jointed by means of pins 12 at the middle ends of said rear legs.

The rear ends of she lateral long rods 14 articulate via a pin 13 to the top part of the arms 7 of said U-shaped member, the front ends of these long rods articulating with and being supported by respective angle struts 15 which at the lower ends are jointed to the top of the respective rear legs 11.

These long rods are fitted with means 16 and 17 for the detachable mounting of a seat or carry-cot, or a seat which can be converted into a carry-cot.

To make it safe in the unfolded position, this chassis has a retainer device 18 (figures 3 and 4) fitted on each side, which consists of a U-section hook 19 articulated via pin 20 to the top part of the front legs 4, which hook clips round a lug 21 joined to the underside of handle arms 2, the hook being pushed against the lug by a helical spring 22 which surrounds the pin 20 and rests, respectively, on the leg 4 and the part forming the hook 19, which part extends along arm 23 opposite the hook to end at a knob 24 which, when pressed manually, serves to unlock the retainer devices and thereby allow the chassis to be folded. The handle arms 2 incorporate, further up from the lugs 21, some more lugs 25 as safety members to guard against accidental folding of the chassis should the retainer happen to fail with regard to lugs 21.

The chassis is also equipped with a wire tray 26 which is fitted, at its front and rear, to a bottom crossmember 27 that joins the front legs 4 and the middle section of the U-shaped member 8, respectively.

The invention, in essence, may be given other embodiments differing only in detail from that shown as an example, which would also be covered by the protection applied for herein, as defined in the appended claims.

## Claims

1. A folding chassis for babies'puschairs of the type comprising a handle (1) mounted such that each of its lower ends slides down over a front leg (4) by means of a guide clamp (9) to which is joined (10) the top end of the corresponding rear leg (11), the top ends of the front legs (4) being articulated (6) by means of a clamp (5) to the top ends of some link-rods, the lower parts of which are articulated (12) at the middle part of the rear legs (11), characterized in that the link-rods are forming the arms (7) of a U-shaped crossmember (8) and in the top part thereof are articulated (13) to rear portions of respective long rods (14) for the support of a seat or a carry-cot, each of these long rods (14) being supported at its front ends by respective struts (15) which articulate above with said front ends and below with the top part of the rear legs (11).

2. A folding chassis for babies' pushchairs, according to claim 1, characterised in that the top part of the front legs (4) includes hook-shaped (19) retainer devices (18) with a knob for unlocking (24) on the side, which clip round respective lugs (21) joined to the arms (2) of the handle (1) for the purpose of locking the chassis in its unfolded position.

## Patentansprüche

1. Faltbarer Rahmen von Kinderwagen, bei dem die Lenkstange (1) an ihren beiden unteren Enden mit Hilfe eines Führungsflansches (9), in dem das obere Ende des entsprechenden Hinterfußes (11) gelenkig (10) befestigt ist, verschiebbar auf einem Vorderfuß (4) gelagert ist, wobei die oberen Enden der Vorderfüße (4) mit Hilfe eines Flansches (5) mit einem Gelenk (6) an den oberen Enden von Gelenkelementen befestigt sind, mit deren Unterteilen sie in der mittleren Zone der Hinterfüße (11) gelenkig gelagert sind (12); dadurch gekennzeichnet, daß die Gelenkelemente die Schenkel (7) eines U-förmigen Querteils (8) bilden und in der oberen Zone derselben jeweils gelenkig (13) an den hinteren Abschnitten von Holmen (14) angebracht sind, die zur Aufnahme eines Sitzes oder eines Wagenaufsatzes dient, wobei die Holme (14) an ihrem vorderen Ende von Druckstreben (15) gehalten werden, die oben an den erwähnten vorderen Enden und unten am Oberteil der Hinterfüße (11) gelenkig gelagert sind.

2. Faltbarer Rahmen von Kinderwagen gemäß Patentanspruch 1, dadurch gekennzeichnet, daß im Oberteil der Vorderfüße (4) Sicherungsstifte (18) mit Haken (19) vorgesehen wurden, die über eine seitliche Lösevorrichtung (24) verfügen und jeweils in entsprechende Warzen an den Schenkeln (2) der Lenkstange (1) eingreifen, um den Rahmen in seiner aufgeklappten Position zu sichern.

## Revendications

1. Châssis pliable pour poussettes d'enfant, du type qui comprend le guidon (1), dont chacune des extrémités inférieures coulissantes est montée sur une patte avant (4) à l'aide d'une bride (9) de guidage sur laquelle s'articule (11) l'extrémité supérieure de la patte arrière (11) correspondante, les extrémités supérieures des pattes avant (4) s'articulant (6) à l'aide d'une bride (5) aux extrémités supérieures d'éléments d'articulation, qui s'articulent par leurs parties inférieures (12) à la zone intermédiaire des pattes arrière (11), caractérisé par le fait que les éléments d'articulation forment les branches (7) d'un élément transversal (8) en U, et qu'ils s'articulent (13), dans la zone supérieure de celles-ci, sur les sections arrières de chacun des longerons (14) pour le support d'un siège ou d'une nacelle; ces longerons (14) sont soutenus, à leur extrémité avant, par leurs supports (15) respectifs qui s'articulent en haut sur lesdites extrémités frontales, et en bas sur la zone supérieure des pattes arrière (11).

2. Châssis pliable pour poussettes d'enfant, suivant la revendication 1, caractérisé par le fait que sur la partie supérieure des pattes avant (4), des cliquets d'arrêt (18) en crochet (19), avec commande latérale (24) de déblocage, ont été prévus; ils sont fixés dans leurs tétons respectifs (21) solidaires des branches (2) du guidon (1) pour le blocage de la position dépliée du châssis.
